# EUROPÄISCHE PATENTANMELDUNG

(11) **EP 1 122 451 A1**
(43) Veröffentlichungstag der Anmeldung: **08.08.2001**
(21) Anmeldenummer: 01101788.6
(22) Anmeldetag: 26.01.2001
(51) Int. Cl.: F16D 1/08, F16K 31/60

(54) **Isolierstück**

(30) Priorität: 02.02.2000 DE 10004259
(71) Anmelder: KSB Aktiengesellschaft, 67227 Frankenthal (DE)
(72) Erfinder: Blanck, Sybille, 67551 Worms (DE); Flak, Stefan, 67227 Frankenthal (DE); Stock, Hans-Georg, 67069 Ludwigshafen (DE)

(57) **Zusammenfassung**

Die Erfindung betrifft eine Wellen-Naben-Verbindung für die Übertragung von Torsionskräften, insbesondere bei Armaturenantrieben, wobei zwischen den zu verbindenden Teilen ein Formschluß besteht. In einem zwischen Wellenteil (5) und Nabenteil (8) angeordneten Zwischenraum (10) ist ein ein- oder mehrteiliger isolierender Mitnehmer (11) aus einem Material geringer Wärmeleitfähigkeit angeordnet.

## Beschreibung

Die Erfindung betrifft eine Wellen-Naben-Verbindung für die Übertragung von Torsionskräften, insbesondere bei Armaturenantrieben, wobei zwischen den zu verbindenden Teilen ein Formschluß besteht.

Eine solche Wellen-Naben-Verbindung ist beispielsweise durch das DE-U 89 00 639 bekannt. Das treibende Bauteil bildet ein Handrad, dessen Nabe mit Formschluß auf einer anzutreibenden Spindelmutter aufliegt. Für die formschlüssige Verbindung zwischen diesen beiden Bauteilen können die unterschiedlichsten Querschnittsformen Verwendung finden. Als eine sehr gebräuchliche Querschnittsform findet die Ausbildung als Zweiflach, Vierkant, Sechskant oder als Keilprofil Verwendung. In der vorbekannten Bauart ist die als Welle wirkende Spindelmutter in einem Gehäusehals einer Armatur in axialer Richtung festgelegt und das als Nabe wirkende Handrad ist auf der Spindelmutter befestigt. Es sind jedoch auch andere Ausführungsformen bekannt, bei denen die formschlüssige kräfteübertragende Wellen-Naben-Verbindung in axialer Richtung verschiebbar ausgebildet ist.

In Anlagen, in denen hohe Temperaturen vorherrschen, beispielsweise in Rohrleitungen von Wärmeträgermedien, besteht die Gefahr, daß aufgrund der hohen Temperaturen eine Wärmeübertragung durch die Wellen-Naben-Verbindung auf das Handrad erfolgt. Um die Gefährdungsschwelle für ein Bedienungspersonal gering zu halten, sind nach geltenden Normen für solche Handräder Grenzwerte vorgegeben, um Verbrennungen bei unbeabsichtigten Berührungen zu vermeiden.

Diesem Nachteil wird zu begegnen versucht, indem aus Kunststoff bestehende Handräder verwendet werden. Deren geringe Wärmeleitung soll eine unzulässige Aufheizung verhindern. Nachteilig bei solchen Handrädern ist jedoch deren geringe Temperaturbeständigkeit, so daß damit nur geringe Kräfte übertragen werden können.

Der Erfindung liegt daher das Problem zugrunde, eine kräfteübertragende formschlüssige Wellen-Naben-Verbindung vor unzulässigen Temperatureinflüssen zu schützen. Die Lösung dieses Problems sieht vor, daß in einem zwischen Wellenteil und Nabenteil angeordneten Zwischenraum ein ein- oder mehrteiliger isolierender Mitnehmer aus einem Material geringer Wärmeleitfähigkeit angeordnet ist.

Ein wesentlicher Vorteil dieser Lösung besteht in dem zu betreibenden geringen Aufwand. Im Prinzip ist nur ein zusätzliches Bauteil in Form des isolierenden Mitnehmers erforderlich. Vorhandene Wellen- oder Nabenteile müssen dann lediglich in ihren Abmessungen verändert werden, um den Zwischenraum für die Anordnung des isolierenden Mitnehmers zu schaffen.

Eine Ausgestaltung der Erfindung sieht vor, daß der isolierende Mitnehmer an einem Abschnitt des Wellenteiles anliegt und/oder einem Abschnitt als Anlagebund für das Nabenteil aufweist. Damit wird eine sichere Positionierung der miteinander zu verbindenden Wellen-Naben-Teile ermöglicht.

Nach einer weiteren Ausgestaltung ist der isolierende Mitnehmer im Zwischenraum gekammert angeordnet. Dies ermöglicht auch die Verwendung eines Kunststoffes für die Ausbildung des Mitnehmers. Die Kammerung verhindert in Grenzsituationen, bei denen unzulässig hohe Temperaturen auftreten, bis zu einem gewissen Maße das Wegfließen des Kunststoffes. Es ist auch dann noch eine sichere Kräfteübertragung möglich.

Der Mitnehmer wird vorzugsweise aus einem Werkstoff geringer Leitfähigkeit hergestellt, wodurch der Wärmetransport innerhalb der Wellen-Naben-Verbindung behindert wird. Damit wird eine nachteilige Aufheizung oder Unterkühlung eines der Bauteile vermieden. Selbstverständlich können als Werkstoff auch keramische Werkstoffe, faserverstärkte Werkstoffe oder dergleichen Anwendung finden.

Der isolierende Mitnehmer liegt an den einander zugekehrten Oberflächen von Wellen- und Nabenteil kräfteübertragend an und kann auch mit mindestens einem in axialer und/oder radialer Richtung vorstehenden Abschnitt dichtend an einem Gehäuse anliegen. Somit übt der Mitnehmer gleichzeitig eine Schutzfunktion gegenüber einem angrenzenden Gehäuse aus. Durch die dichtende Anlage wird der Eintritt von Schmutz, Spritzwasser oder dergleichen in das Gehäuse verhindert.

Zur weiteren Reduzierung der Wärmeübertragung kann dasjenige Teil, welche für den Wärmeeintrag in die Wellen-Naben-Verbindung verantwortlich ist, mit die Wärmeübertragung reduzierenden Abschnitten geringer Wandstärke versehen sein. Diese Abschnitte üben die Funktion einer Wärmesperre aus und reduzieren im wesentlichen Maße die von diesem Bauteil ausgehende Wärmeübertragung. In Verbindung mit dem isolierenden Mitnehmer unterstützt diese Maßnahme die Verwendung von standardmäßigen metallischen Handrädern an Armaturen, die zur Absperrung sehr heißer Medienströme dienen.

Für die formschlüssige Kräfteübertragung zwischen den miteinander zu verbindenden Wellen- und Nabenteil kann der ein- oder mehrteilige, überwiegend ringförmig gestaltete Mitnehmer an seinen inneren und äußeren Umfangsflächen unterschiedliche Querschnittsformen aufweisen. Dies können Zweiflach, Vierkant, Sechskant, Keilprofile, Polygonale oder sonstige Formen und deren Kombinationen sein. Entsprechend dem Temperaturbereich wird die Wandstärke des isolierenden Mitnehmers berechnet, damit die entsprechende Isolierwirkung eintritt.

Der isolierende Mitnehmer bedingt den weiteren Vorteil, daß damit aus Kunststoff bestehende Handräder auch an Armaturen für die Absperrung von heißen Medien Verwendung finden können.

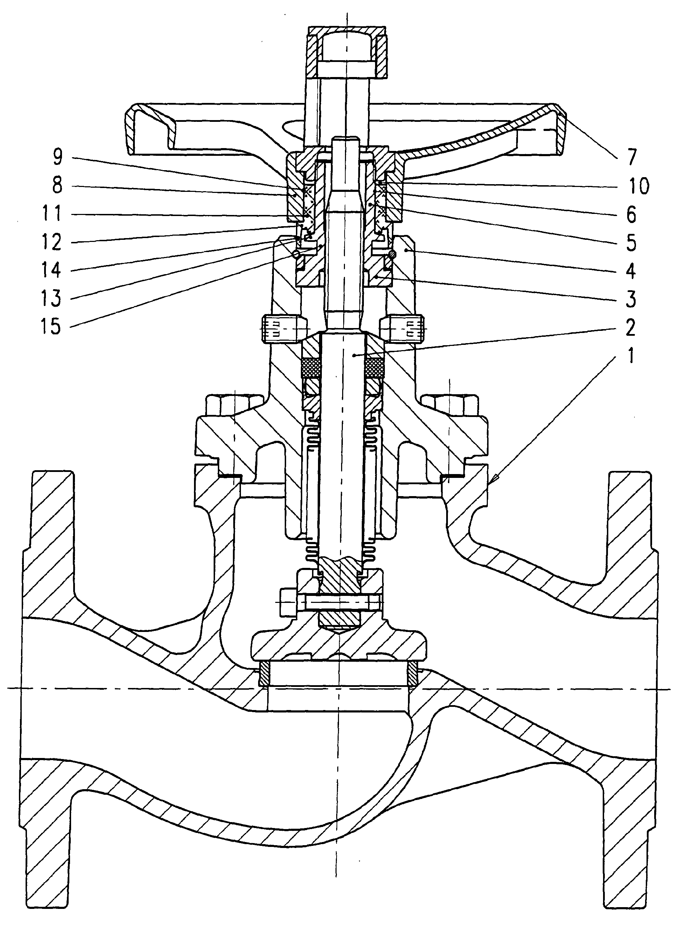

Ein Ausführungsbeispiel der Erfindung ist in der Zeichnung dargestellt. Darin ist eine Absperrarmatur gezeigt, deren Spindel 2 durch eine Spindelmutter 3 bewegt wird. Die Spindelmutter 3 ist hier in einem Gehäuse 4 der Armatur 1 gelagert.

Die Spindelmutter 3 verfügt über ein Wellenteil 5 mit einer äußeren Umfangsfläche 6, deren Querschnittsform eine formschlüssige Kräfteübertragung ermöglicht. Ein Handrad 7 verfügt über ein Nabenteil 8, dessen innere Umfangsfläche 9 ebenfalls eine, eine formschlüssige Kräfteübertragung ermöglichende Querschnittsform aufweist. Zwischen der inneren Umfangsfläche 9 des Nabenteils 8 und der äußeren Umfangsfläche 6 des Wellenteiles 5 besteht ein Zwischenraum 10, dessen Abmessungen eine direkte Kräfteübertragung zwischen Wellen- und Nabenteil nicht zulassen. Für die direkte Kräfteübertragung, insbesondere der Torsionskräfte, ist in den Zwischenraum 10 ein isolierender Mitnehmer 11 angeordnet, dessen äußere und innere Umfangsflächen mit den Umfangsflächen 6, 9 von Wellen- und Nabenteil korrespondieren. Der Mitnehmer füllt den Zwischenraum 10 aus und gewährleistet die Kräfteübertragung innerhalb der Wellen-Naben-Verbindung. Infolge seiner isolierenden Eigenschaften unterbindet oder reduziert er in erheblichem Maße die Wärmeübertragung innerhalb der Wellen-Naben-Verbindung.

Die mit den Umfangsflächen des Mitnehmers 11 zusammenwirkenden Umfangsflächen 6, 9 können eine gleiche Querschnittsform oder unterschiedliche Querschnittsformen aufweisen. Bei gleichen Querschnittsformen, beispielsweise in einer Ausbildung als Sechskant, weist der Mitnehmer eine Bauform auf, die als Ringelement mit einem Außen- und Innensechskant unterschiedlicher Abmessungen versehen ist. Ebenso gut ist es möglich, am isolierenden Mitnehmer 11 einen mit dem Wellenteil 5 korrespondierenden Innensechskant und eine mit dem Nabenteil 8 korrespondierende Außenverzahnung vorzusehen. Analog hierzu sind auch andere Formen möglich, die die Torsionskräfte übertragen.

Der isolierende Mitnehmer 11 verfügt über einen Abschnitt 12 als Anlagefläche für die Nabe 8. Analog hierzu weist der Wellenteil 5 einen Abschnitt 13 als Anlagefläche für den isolierenden Mitnehmer 11 auf. Diese Abschnitte 12, 13 dienen zur Positionierung der zusammenwirkenden Teile.

In dem hier gezeigten Ausführungsbeispiel, bei dem die Wellen-Naben-Verbindung in axialer Richtung festgelegt ist, erstreckt sich ein in axialer Richtung vorstehender Abschnitt 14 dichtend in das Gehäuse 4 der Armatur 1. Somit übernimmt der isolierende Mitnehmer 11 gleichzeitig eine zusätzliche Abdichtfunktion, mit der eine Verschmutzung des Gehäuseinneren verhindert wird.

Befindet sich bei diesem Ausführungsbeispiel der Wellen-Naben-Verbindung innerhalb der Armatur ein heißes Fluid, so erfolgt eine das Wellenteil 5. Zur Reduzierung der Wärmeleitung verfügt daher der Wellenteil 5 und/oder die Spindelmutter 3 über einen oder mehrere Abschnitte 15 geringerer Querschnittsflächen, wodurch die Wärmeleitung in das Wellenteil 5 behindert wird. Diese Abschnitte 15 weisen jedoch eine Dimensionierung auf, aufgrund derer eine sichere Kräfteübertragung zwischen den Bauteilen gewährleistet ist.

Solche die Wärmeübertragung reduzierenden Abschnitte können bei Bedarf auch am Nabenteil 8 angebracht werden. In entsprechender Weise kann eine solche Ausbildung auch in Verbindung mit Kältemitteln erfolgen.

Im vorliegenden Beispiel ist eine vorhandene Spindelmutter 3 durch einfache spanabhebende Bearbeitung in ihren Außenabmessungen reduziert worden, um somit den Zwischenraum 10 zwischen dem Nabenteil 8 und dem Wellenteil 5 auszubilden. Da die Herstellung solcher Elemente auf CNC-gesteuerten Maschinen erfolgt, kann im Bedarfsfall durch einfache Umprogrammierung eine auftragsbezogene Konstruktionsänderung vorgenommen werden.

## Patentansprüche

1. Wellen-Naben-Verbindung für die Übertragung von Torsionskräften, insbesondere bei Armaturenantrieben, wobei zwischen den zu verbindenden Teilen ein Formschluß besteht, **dadurch gekennzeichnet, daß** in einem zwischen Wellenteil (5) und Nabenteil (8) angeordneten Zwischenraum (10) ein ein- oder mehrteiliger isolierender Mitnehmer (11) aus einem Material geringer Wärmeleitfähigkeit angeordnet ist.

2. Wellen-Naben-Verbindung nach Anspruch 1, dadurch gekennzeichnet, daß der isolierende Mitnehmer (11) an einem Abschnitt (13) des Wellenteiles (5) anliegt und/oder einen Abschnitt (12) als Anlagebund für das Nabenteil (8) aufweist.

3. Wellen-Naben-Verbindung nach Anspruch 1 oder 2, dadurch gekennzeichnet, daß der isolierende Mitnehmer (11) im Zwischenraum (10) gekammert angeordnet ist.

4. Wellen-Naben-Verbindung nach Anspruch 1, 2 oder 3, dadurch gekennzeichnet, daß der isolierende Mitnehmer (11) an einander zugekehrten Oberflächen von Wellen- und Nabenteil (6, 9) kräfteübertragend anliegt.

5. Wellen-Naben-Verbindung nach einem der Ansprüche 1 bis 4, dadurch gekennzeichnet, daß der isolierende Mitnehmer (11) mit mindestens einem in axialer und/oder radialer Richtung vorstehenden Abschnitt (12, 13, 14) dichtend an einem Gehäuse (4) anliegt.

6. Wellen-Naben-Verbindung nach einem oder mehreren der Ansprüche 1 bis 5, dadurch gekennzeichnet, daß ein Wärme einleitendes Teil der Wellen-Naben-Verbindung mit die Wärmeübertragung reduzierenden Abschnitten (15) geringer Wändstärke versehen ist.

7. Wellen-Naben-Verbindung nach einen oder mehreren der Ansprüche 1 bis 6, dadurch gekennzeichnet, daß der isolierende Mitnehmer (11) zur Anlage an den Umfangsflächen (6, 9) von Wellen- und Nabenteil (5, 8) einander gleichende oder zueinander verschieden ausgebildete Anlageflächen aufweist.
